# EUROPEAN PATENT APPLICATION

(11) **EP 2 746 752 A2**
(43) Date of publication of application: **25.06.2014**
(21) Application number: 13198179.7
(22) Date of filing: 18.12.2013
(51) Int. Cl.: G01N 21/954

(54) **Imaging system for inspecting a turbine**

(30) Priority: 20.12.2012 US 201213722091
(71) Applicant: General Electric Company, Schenectady, New York 12345 (US)
(72) Inventor: Giametta, Lucy Summerville, Greenville, SC South Carolina 29615 (US)
(74) Representative: Cleary, Fidelma

(57) **Abstract**

An imaging system (100) for inspecting a turbine (2) through an opening (23) in a turbine casing (22) is disclosed. The system includes a fitting (110) installed in the opening. A lens assembly (130) is mounted to a first side (111) of the fitting and extends inside of the turbine casing. A fiber optic bundle (140) is mounted to a second side (112) of the fitting and extends outside of the turbine casing to a camera (120) disposed remote from the opening.

## Description

### BACKGROUND

The subject matter disclosed herein relates to an imaging system for inspecting a turbine.

A typical turbine (e.g., a gas turbine) will have one or more sets of turbine blades mounted concentrically and serially, each set on its own turbine blade ring. The turbine blades are curved and sometimes called buckets because they perform essentially the same function as buckets in a water wheel. Hot, high velocity combustion gases impact the turbine blades, which are shaped to capture the gases. The impacting gases move the turbine blades and that motion is converted into rotational motion by the turbine blade ring. For turbine generators, the output of the turbine blade ring is connected to the a drive that turns the rotor of a generator to generate electricity. For turbine engines, the turbine blade ring is connected to a motor drive, such as the propeller of a ship, for turning the propeller.

The turbine blades in gas turbines are subjected to not only the high temperatures, but also to combustion gases. The leading edge of a turbine blade encounters the hottest gases and thus may be subject to the most severe wear and tear. Another area on the turbine blade that is subject to severe wear and tear is where the turbine blade attaches to the surface of the turbine blade ring. If a turbine blade deteriorates at this attachment point, it could detach from its turbine blade ring and cause catastrophic failure of the gas turbine. For those and other reasons it is important to periodically inspect the turbine blades and their leading edges, to determine if a turbine blade requires replacement before it fails during operation.

Cameras, including infrared (IR) cameras, are used to inspect turbines, including turbine blades through openings (e.g., ports or borescope holes) in the turbine casing. The IR cameras can also be used to determine temperature. In some installations, high temperature optical elements and fiber optics directed at the turbine blades extend from the hot gas path inside the turbine casing of the turbine to an opening on which a camera is installed on the outside of the turbine casing. The camera is mounted to a flange. Since the openings are often obstructed by structural supports and numerous conduits and pipes to carry combustion air, fuel and coolant to a number of locations inside the gas turbine, the camera cannot be installed on or near those obstructed openings since there is not sufficient clearance for the camera. This is especially true for multi-wavelength cameras, which require more space for installation. In addition, the use of the high temperature fiber optic bundle required to withstand the high temperatures of the hot gases results in significant signal loss. Furthermore, installation or repair of the camera on the opening requires that the turbine be shut down for a significant amount of time.

The discussion above is merely provided for general background information and is not intended to be used as an aid in determining the scope of the claimed subject matter.

### BRIEF DESCRIPTION

An imaging system for inspecting a turbine through an opening in a turbine casing is disclosed. The system includes a fitting installed in the opening. A lens assembly is mounted to a first side of the fitting and extends inside of the turbine casing. A fiber optic bundle is mounted to a second side of the fitting and extends outside of the turbine casing to a camera disposed remote from the opening.

Since the camera can be located remote from the opening, an advantage that may be realized in the practice of some disclosed embodiments of the imaging system is that the opening can still be used for inspecting the turbine blades even if the opening is obstructed by structural supports, pipes, or conduits. The remote location of the camera also allows the use of larger cameras, including multi-wavelength infrared cameras. By locating the camera remotely, more openings in the turbine, including ports and borescope holes, can be used by the imaging system allowing greater access to view the turbine blades. In many cases, the openings need not be modified. The imaging system also allows for quicker installation and repair of the cameras, minimizing or eliminating required downtime of the turbine. Another advantage of some disclosed embodiments is that low temperature fiber optic bundles, with relatively minor losses, can be used since the fiber optics are located outside of the turbine casing and away from the hot gas path.

In one embodiment, an imaging system for inspecting a turbine through an opening in a turbine casing is disclosed. The imaging system comprises a fitting for installation in the opening in the turbine casing, the fitting having a first side facing the inside of the turbine casing and a second side facing the outside of the turbine casing, a camera disposed remote from the opening outside of the turbine casing, a lens assembly mounted to the first side of the fitting and extending inside of the turbine casing, and a fiber optic bundle mounted to the second side of the fitting and extending outside of the turbine casing to the camera.

In another embodiment, the imaging system comprises a fitting for installation in the opening in the turbine casing, the fitting having a first side facing the inside of the turbine casing and a second side facing the outside of the turbine casing, an infrared camera disposed remote from the opening outside of the turbine casing, a lens assembly mounted to the first side of the fitting and extending inside of the turbine casing, the lens assembly comprising a rigid tube enclosing lenses and spacers between the lenses, and a flexible fiber optic bundle mounted to the second side of the fitting and extending outside of the turbine casing to the camera.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:

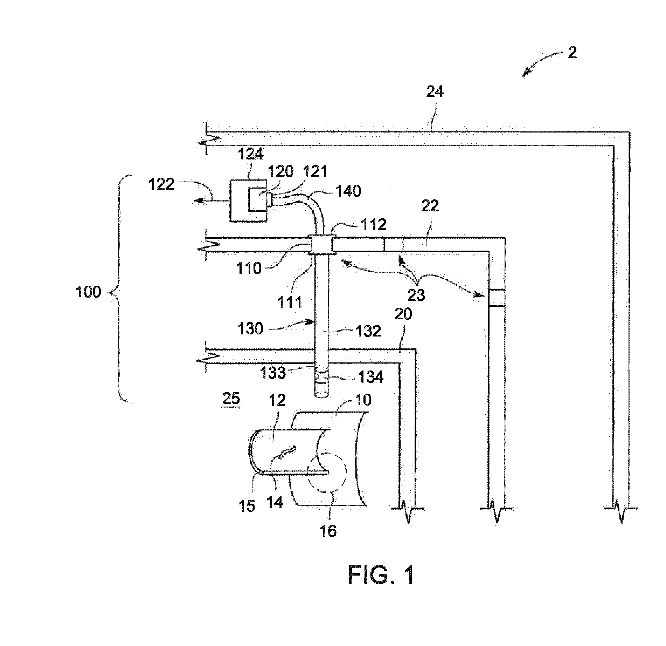

FIG. 1 is an exemplary partial perspective view of a section of a gas turbine.

### DETAILED DESCRIPTION

FIG. 1 is an exemplary partial perspective view of a section of a gas turbine 2 contained in an enclosure 24. The gas turbine 2 has an inner turbine casing 20 that is part of the turbine blade ring 10 and contains the hottest gases, which may reach or exceed 800°C. An outer turbine casing 22 surrounds the turbine blade ring 10 and may experience temperatures in the range of 300-500°C. The outer turbine casing 22 has openings (e.g., ports or borescope holes) 23 for accessing and viewing the turbine blade ring 10. It will be understood that the gas turbine 2 can have a single casing rather than an inner turbine casing 20 and an outer turbine casing 22. A single turbine blade 12 is shown mounted on the turbine blade ring 10 in the hot gas path 25 of the gas turbine 2. The surface of the turbine blade has a defect 14 indicative of damage to the surface of the turbine blade 12 that may have been caused by the hot gases. Other portions of the turbine blade 12 likely to experience wear and damage are the leading edge 15 of the turbine blade 12 and the mounting region 16 where the leading edge 15 of the turbine blade 12 meets the turbine blade ring 10.

In order to inspect the turbine blade 12, an imaging system 100 is installed. The imaging system 100 comprises a fitting 110 for installation in an opening 23 in the outer turbine casing 22. The fitting 110 attaches to an opening 23 in the outer turbine casing 22. The fitting 110 has a first side 111 facing the inside of the outer turbine casing 22 and a second side 112 facing the outside of the outer turbine casing 22. In one embodiment, the fitting 110 has a nipple that forms a pressure seal against the outer turbine casing 22. In other embodiments, the fitting 110 can be a threaded fitting. The fitting 110 can include a sapphire window flange. If necessary, the fitting 110 could be lined for purge air or insulated from the environment, which can reach temperatures of 500°C.

A camera 120 is disposed remote from the opening 23 outside of the outer turbine casing 22. In one embodiment, the camera 120 is an infrared (IR) camera installed in a housing 124. A fiber optic bundle 140 is mounted to the second side 112 of the fitting 110 and extends outside of the outer turbine casing 22 to the camera 120. The fiber optic bundle 140 can be connected to the camera 120 or the housing 124 with a fitting 1101 (e.g., threaded fitting).

A lens assembly 130 is mounted to the first side 111 of the fitting 110 and extends inside of the outer turbine casing 22 to inspect the turbine blade 12. In one embodiment, the lens assembly 130 comprises a rigid tube 132 enclosing high temperature glass lenses 134 and spacers 133 between the lenses 134. This rigid tube 132 of the lens assembly 130 can also be surrounded by another tube (not shown) to provide a passage for cooling air if it is required. Cooling air can be taken from compressor discharge air and the higher pressure will mitigate ingestion from the hot gas path 25.

As can be seen in FIG. 1, the use of the fiber optic bundle 140 allows the camera 120 to be located remote from the opening 23 outside the outer turbine casing 22. Light is transmitted through the lens assembly 130 to the fiber optic bundle 140 to the camera 130 where images of the turbine blade 12 are captured. The captured image of the turbine blade 12 can be sent by a signal wire 122 to a remote computer which controls the camera 120. This arrangement allows openings 23 that may be obstructed by structural supports, pipes, and conduits to be used to access and view the turbine blade 12 to be inspected by cameras 120 installed away from the obstructed openings. Since the fiber optic bundle 140 is located outside of the outer turbine casing 22 and not subject to the hot gases, a low temperature fiber optic bundle 140 with relatively low losses can be used. The fiber optic bundle 140 can also be flexible for ease of installation.

In one embodiment, the camera 120 is located on the outer turbine casing 22, while in another embodiment, the camera 120 is located on the interior or exterior of the enclosure 24 of the gas turbine 2. The camera 120 could also be mounted on a manhole cover where more space is available. The remote location of the camera 120 also allows the use of larger cameras, including multi-wavelength infrared cameras. By locating the camera 120 remotely, this allows for quicker installation and repair of the imaging system 100, minimizing or eliminating required downtime of the turbine.

This written description uses examples to disclose the invention, including the best mode, and to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An imaging system (100) for inspecting a turbine (2) through an opening (23) in a turbine casing, the imaging system comprising:
a fitting (110) for installation in the opening (23) in the turbine casing (22), the fitting having a first side (111) facing the inside of the turbine casing and a second side (112) facing the outside of the turbine casing;
a camera (120) disposed remote from the opening outside of the turbine casing;
a lens assembly (130) mounted to the first side of the fitting and extending inside of the turbine casing; and
a fiber optic bundle (140) mounted to the second side of the fitting and extending outside of the turbine casing to the camera.

2. The imaging system (100) of claim 1, wherein the fitting (110) is a threaded fitting.

3. The imaging system (100) of either of claim 1 or 2, wherein the fitting provides a pressure seal on the turbine casing (22).

4. The imaging system (100) of any preceding claim, wherein the camera (120) is an infrared camera.

5. The imaging system (100) of any preceding claim, wherein the lens assembly comprises a rigid tube (132) enclosing lenses (134) and spacers (133) between the lenses.

6. The imaging system (100) of any preceding claim, wherein the fiber optic bundle (140) is connected to the camera with a threaded fitting.

7. The imaging system (100) of any preceding claim, wherein the fiber optic bundle (140) is connected to the camera with a fitting.

8. The imaging system (100) of any preceding claim, wherein the camera is mounted to an enclosure (24) of the turbine.

9. The imaging system (100) of any preceding claim, wherein the camera comprises an infrared camera;
the lens assembly (130) comprising a rigid tube (132) enclosing lenses (134) and spacers (133) between the lenses; and
wherein the fiber optic bundle comprises a flexible fiber optic bundle.

10. The imaging system (100) of claim 9, wherein the fitting (110) is a threaded fitting.

11. The imaging system (100) of either of claim 9 to 10, wherein the fitting (110) provides a pressure seal on the turbine casing (22).

12. The imaging system (100) of any of claims 9 to 11, wherein the fiber optic bundle (140) is connected to the camera (120) with a threaded fitting.

13. The imaging system (100) of any of claims 9 to 12, wherein the camera (120) is mounted to an enclosure of the turbine.
